# FASCICULE DE BREVET EUROPEEN

(11) **EP 0 359 653 B1**
(45) Date de publication et mention de la délivrance du brevet: **25.01.1995**
(21) Numéro de dépôt: 89402485.0
(22) Date de dépôt: 12.09.1989
(51) Int. Cl.: F16H 55/48, F16D 1/06, H02K 7/10, D06F 37/30

(54) **Poulie, arbre et moteur comportant une telle poulie, et son procédé de réalisation**
Scheibe, Welle und Motor mit einer solchen Scheibe und ihre Herstellung
Pulley, shaft and motor with such a pulley, and method of constructing it

(30) Priorité: 16.09.1988 FR 8812128
(43) Date de publication de la demande: 21.03.1990
(73) Titulaire: SOCIETE ELECTROMECANIQUE DU NIVERNAIS - SELNI, F-58000 Nevers (FR)
(72) Inventeur: Huron, Claude, F-92045 Paris la Défense (FR); Gaulier, Michel, F-92045 Paris la Défense (FR)
(74) Mandataire: Grynwald, Albert

(56) Documents cités:
- DE-A- 2 939 037
- DE-U- 8 525 463
- FR-A- 2 606 950
- GB-A- 2 197 431
- US-A- 4 571 111

## Description

L'invention se rapporte principalement à une poulie, à un arbre et un moteur comportant une telle poulie et à son procédé de réalisation.

Dans la réalisation d'appareils comportant des moteurs électriques il peut s'avérer nécessaire, pour des raisons de sécurité, d'isoler le moteur de la masse, constituée par exemple par la carrosserie de l'appareil. Pour isoler le moteur par rapport à la masse, il est nécessaire d'isoler l'arbre du moteur, normalement métallique, de la masse. Cette isolation permet d'obtenir une double isolation et/ou de simplifier les circuits d'anti-parasitage électriques de l'appareil. Dans un moteur électrique classique, la transmission du mouvement est assurée par une courroie passant par une poulie rendue solidaire de l'axe du moteur. Une courroie neuve réalisée en matériau polymère constitue une bonne isolation électrique. Toutefois, des particules métalliques, provenant de l'usure des pièces risquent de se déposer sur la courroie et de la rendre conductrice. Ainsi, il est nécessaire d'isoler la courroie par rapport à l'arbre du moteur.

Il est connu d'isoler la courroie de transmission de mouvement par rapport à l'arbre d'un moteur électrique par collage de pièces métalliques et isolantes ou par surmoulage des pièces métalliques à l'aide d'un plastique isolant.

Le document FR-A- 2 606 950 décrit l'interposition d'une douille isolante entre un arbre et une poulie métallique.

Les dispositifs de type connu présentent de nombreux inconvénients. Ils sont de construction compliquée, transmettent un couple faible, et ne permettent pas une rigoureuse concentricité de la surface externe de la poulie avec l'axe de l'arbre moteur. De plus, tout empilement de matière isolante et conductrice tend à augmenter le diamètre extérieur de la poulie ce qui, avec certains types de moteurs électriques présente l'inconvénient de ne pas faire travailler les moteurs à son régime optimal. En effet, la diminution du diamètre externe de la poulie permet de faire tourner un moteur électrique à une vitesse angulaire supérieure.

La poulie selon la présente invention est réalisée avec un matériau isolant électrique. On réalise la forme extérieure de la poulie directement dans un matériau plastique usinable moulable ou thermoformable. Il est impératif que le matériau isolant choisi possède intrinsèquement les qualités de tenue mécanique et notamment résistance à la friction et tenue en température nécessitées par l'application. L'arbre comporte un moletage empêchant la poulie de tourner, la poulie tenant en place par élasticité.

La poulie selon la présente invention est d'une construction simple, supporte des couples de rotation élevée et, est quasi parfaitement concentrique avec l'axe de l'arbre.

Plus précisément, l'invention a pour objet une poulie pour l'entraînement d'une courroie de transmission de force à partir d'un moteur électrique, telle que définie par la revendication 1.

L'invention a aussi pour objet un arbre de moteur électrique tel que défini par la revendication 9.

L'invention a aussi pour objet un procédé de réalisation d'arbre pour moteur électrique tel que défini par la revendication 14.

L'invention sera mieux comprise au moyen de la description ci-après et des figures annexées données comme des exemples non limitatifs parmi lesquelles :
- la figure 1 est un schéma d'un premier exemple de réalisation d'une poulie selon la présente invention;
- la figure 2 est un schéma d'un second exemple de réalisation d'une poulie selon la présente invention;
- la figure 3 est un schéma d'un moteur électrique selon la présente invention.

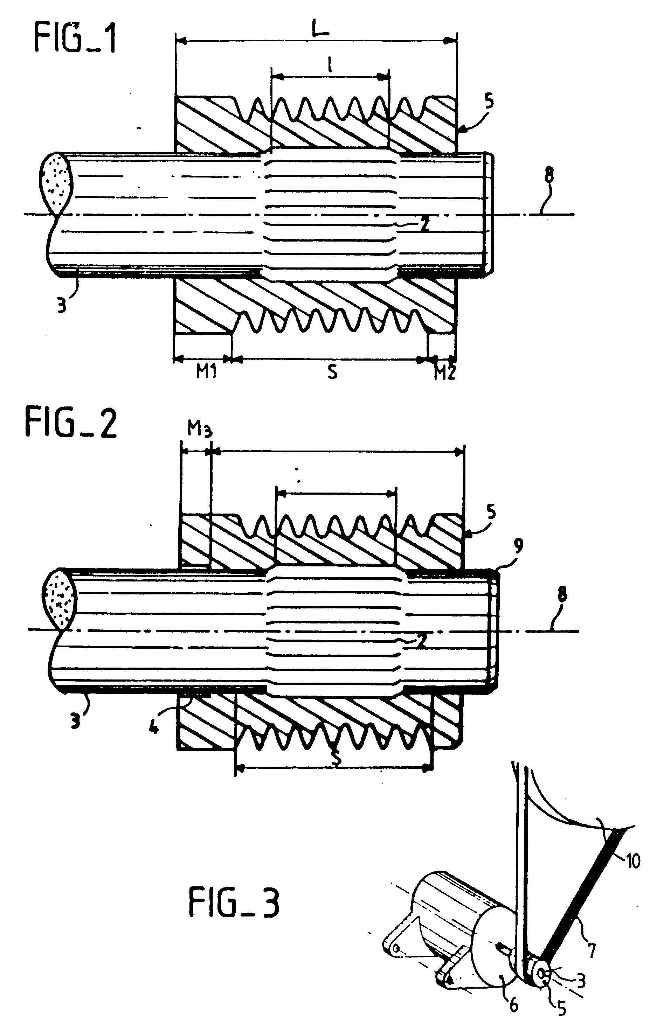

Sur les figures 1 à 3 on a utilisé les mêmes références pour désigner les mêmes éléments. Sur la figure 1, on peut voir un premier exemple de réalisation d'une poulie 5, selon la présente invention. La poulie 5 est réalisée dans un matériau isolant électrique. Dans un premier exemple de réalisation, la poulie est réalisée dans un matériau plastique usinable comme par exemple un polyamide du groupe 6-6 (PA-6-6) chargé en molybdène. Un exemple d'un tel matériau plastique est vendu par la Société POLYPENCO sous la dénomination commerciale NYLATRON.

Dans un second exemple de réallsation de la poulie selon la présente invention, on utilise des matériaux plastiques thermoformables ou thermodurcissables. Avantageusement, les matériaux plastiques ne comportent pas de fibres sous forme de charge pour ne pas risquer au cours de fonctionnement, sous l'effet de l'usure de la surface de la poulie, de la rendre abrasive ce qui nuirait à la durée de vie de la courroie.

La poulie 5 comporte une surface de contact S destinée à recevoir une courroie. La forme de la surface de contact est déterminée par la section de la courroie de transmission de mouvement. Par exemple la poulie 5 peut comporter des gorges trapézoïdales ou comme représenté sur la figure des gorges multiples comportant des profils "J" ou des profils "H" tels que définis dans la norme DIN 7867. Avantageusement, la longueur totale L de la zone de contact de la poulie avec l'arbre est supérieure à la longueur S de la surface de contact avec la courroie. Dans l'exemple illustré sur la figure 1, la surface de contact S est prolongée d'un côté par une surface M1 et de l'autre côté par une surface M2. Il n'est pas nécessaire que les surfaces M1 et M2 soient égales. Ces deux surfaces participent au maintien de la concentricité de la face externe de la poulie 5 et de l'axe 8 de l'arbre 3.

Avantageusement, pour empêcher la rotation de la poulie 5 autour d'un arbre 3, par exemple d'un moteur électrique, l'arbre 3 comporte des moletages 2. Avantageusement, la longueur 1 des moletages 2 est inférieure à la longueur L de la zone de contact entre la poulie 5 et l'arbre 3. Le moletage à angles vifs 2 illustré sur la figure 1 a un diamètre supérieur de l'arbre 3. Ainsi, la poulie 5 est maintenue en place. Elle ne se déplace pas selon l'axe 8 de l'arbre 3. Ainsi on n'a pas besoin de réaliser des butées qui compliquaient les structures de type connu. Dans un exemple de réalisation du dispositif selon la présente invention la résistance au déplacement axial est supérieure à 1 000 N. Avantageusement, la surface de contact S déborde de la surface l des moletages 2. Ainsi, la surface extérieure de la poulie 5 tourne de façon rigoureusement concentrique avec l'axe de rotation 8 de l'arbre 3. Dans cet exemple avantageux de réalisation, la concentricité entre la poulie 5 et l'extérieur de l'arbre 3 est assurée même si la réalisation du moletage 2 aboutit à ce que celui-ci n'ait pas une pénétration parfaitement homogène dans le plastique de la poulie 5. Le couple susceptible d'être transmis par la poulie 5 selon la présente invention dépend de l'élasticité du matériau employé et de la forme et taille des moletages 2 de l'arbre 3. Dans des exemples de réalisation, les poulies 5 selon la présente invention sont capables de transmettre le couple de force supérieure à plusieurs dizaines de N.m et ceci pour des températures pouvant atteindre 100°C.

Dans un premier exemple de réalisation on utilise des matériaux usinables pour réaliser la poulie 5. Dans un tel cas on effectue l'usinage interne et externe de la poulie par exemple au tour. On s'assure de la concentricité des faces internes et externes de la poulie. Une fois usinée, la poulie 5 est emmanchée sur l'arbre 3 grâce à son élasticité. Une fois en place l'arbre 3 et la poulie 5 sont solidarisés.

Dans une seconde variante de réalisation, on utilise des matériaux moulables par exemple thermoplastiques ou thermodurcissables. Ces matériaux sont, par exemple moulés autour de l'arbre 3. Ainsi, il est possible d'utiliser des matériaux présentant une rigidité importante.

Sur la figure 2, on peut voir un exemple de réalisation de la poulie 5 selon la présente invention. La poulie de la figure 2 comporte un alésage 4 sur une longueur M3 faible par rapport à la longueur totale de la poulie. L'alésage 4 a un diamètre supérieur à celui de l'arbre 3. L'alésage permet un prépositionnement en vue d'une opération d'emmanchement de là poulie 5 sur l'arbre 3. Le prépositionnement est particulièrement important pour une opération automatique d'emmanchement avec des poulies 5 réalisées dans un matériau élastique. Avantageusement, l'arbre 3 comporte à son extrémité une section tronconique 9 facilitant l'emmanchement automatique. L'utilisation d'un emmanchement automatique permet de réduire les coûts de production. La longueur L de la partie en contact de la poulie 5 avec l'arbre 3 se trouve réduite de la longueur M3 de l'alésage 4.

Les poulies illustrées sur les figures 1 à 2 l'ont été à titre d'exemple non limitatif. Il est bien entendu que d'autres types de poules comme par exemple l'association de l'usinage et de moulage ne sort pas du cadre de la présente invention. De même la réalisation de roues dentées concentriques à l'axe 8 d'un arbre 3 ne sort pas du cadre de la présente invention.

Sur la figure 3, on peut voir un moteur électrique 6 comportant un arbre 3 autour duquel a été emmanchée une poulie 5. Sur la poulie 5 passe une courroie 7 entraînant une poulie 10 par exemple de diamètre supérieur à celui de la poulie 5. Dans le dispositif selon la présente invention la poulie 10 est parfaitement isolée électriquement par rapport au moteur 6.

L'invention s'applique principalement à la réalisation de poulies permettant la transmission de mouvements d'un axe métallique tout en assurant une bonne isolation électrique. L'invention s'applique notamment à la réalisation de moteurs électriques et de dispositifs comportant de tels moteurs. L'invention s'applique principalement à la réalisation de pompes et de moteurs d'entraînement pour lave-linge ou lave-vaisselle.

## Revendications

1. Poulie (5) pour entraînement d'une courroie (7) de transmission de force à partir d'un moteur électrique (6), caractérisée par le fait que ladite poulie (5) est entièrement réalisée dans un matériau isolant présentant une élasticité permettant son emmanchement sur un arbre (3) d'un moteur, cet arbre (3) étant muni d'un moletage dont le diamètre est supérieur au diamètre de l'arbre (3).

2. Poulie (5) selon la revendication 1, caractérisée par le fait que le matériau isolant est un matériau plastique.

3. Poulie (5) selon les revendications 1 et 2, caractérisée par le fait que le matériau isolant est un polyamide du groupe 64(PA-6-6) chargé en molybdène.

4. Poulie (5) selon la revendication 3, caractérisée par le fait que ce matériau isolant est commercialisé sous la dénomination "NYLATRON" par la société POLYPENCO.

5. Poulie (5) selon l'une des revendications précédentes, caractérisée par le fait que ladite poulie est réalisée dans un matériau thermoplastique ou thermodurcissable.

6. Poulie selon l'une quelconque des revendications précédentes, caractérisée par le fait que la longueur L de la zone de contact entre la surface interne de la poulie (5) et la surface externe de l'arbre (3) est supérieure à la longueur I des moletages (2).

7. Poulie (5) selon l'une quelconque des revendications 1 à 6, caractérisée par le fait qu'elle comporte une pluralité de gorges de profil en "H".

8. Poulie (5) selon l'une quelconque des revendications 1 à 6, caractérisée par le fait qu'elle comporte une pluralité de gorges de profil en "J".

9. Arbre (3) de moteur électrique (6), caractérisé par le fait qu'il comporte au moins une poulie (5) selon l'une quelconque des revendications précédentes.

10. Arbre (3) selon la revendication 9, caractérisé par le fait que la poulie (5) tient sur ledit arbre par élasticité.

11. Arbre (3) selon la revendication 9, caractérisé par le fait qu'il comporte un moletage.

12. Arbre selon la revendication 11, caractérisé par le fait que ce moletage a un diamètre supérieur au diamètre de l'arbre.

13. Arbre selon l'une quelconque des revendications 9 à 12, caractérisé par le fait que la longueur L de la zone de contact entre la surface interne de la poulie (5) et la surface externe de l'arbre (3) est supérieure à la longueur I du moletage (2).

14. Procédé de réalisation d'arbre pour moteur électrique (6), caractérisé par le fait qu'il comporte les étapes suivantes:
· usinage d'un arbre afin de réaliser des moletages dont le diamètre est supérieur au diamètre de l'arbre,
· usinage ou moulage d'une poulie en un matériau selon l'une des revendications 2, 3, 4 ou 5.
· emmanchement de la poulie (5) sur un arbre (3) selon l'une des revendications 9 ou 10.

## Patentansprüche

1. Riemenscheibe (5) zum Antrieb eines Treibriemens (7) durch einen Elektromotor (6), dadurch gekennzeichnet, daß die Riemenscheibe (5) vollständig aus einem Isoliermaterial hergestellt ist, das eine Elastizität aufweist, die das Aufstecken auf eine Welle (3) eines Motors ermöglicht, wobei diese Welle (3) mit einer Rändelung versehen ist, deren Durchmesser größer als der Durchmesser der Welle (3) ist.

2. Riemenscheibe (5) nach Anspruch 1, dadurch gekennzeichnet, daß das Isoliermaterial ein Kunststoff ist.

3. Riemenscheibe (5) nach den Ansprüchen 1 und 2, dadurch gekennzeichnet, daß das Isoliermaterial ein molybdänhaltiges Polyamid der Gruppe 6-6 (PA-6-6) ist.

4. Riemenscheibe (5) nach Anspruch 3, dadurch gekennzeichnet, daß das Isoliermaterial unter der Bezeichnung "NYLATRON" von der Firma POLYPENCO im Handel vertrieben wird.

5. Riemenscheibe (5) nach einem der vorhergehenden Ansprüche, dadurch gekennzeichnet, daß die Riemenscheibe aus einem thermoplastischen oder wärmehärtbaren Material hergestellt ist.

6. Riemenscheibe nach einem der vorhergehenden Ansprüche, dadurch gekennzeichnet, daß die Länge L der Kontaktzone zwischen der Innenfläche der Riemenscheibe (5) und der Außenfläche der Welle (3) größer als die Länge 1 der Rändelung (2) ist.

7. Riemenscheibe nach einem der Ansprüche 1 bis 6, dadurch gekennzeichnet, daß sie eine Anzahl von Rillen mit H-Profil aufweist.

8. Riemenscheibe (5) nach einem der Ansprüche 1 bis 6, dadurch gekennzeichnet, daß sie eine Anzahl von Rillen mit J-Profil aufweist.

9. Welle (3) eines Elektromotors (6), dadurch gekennzeichnet, daß sie wenigstens eine Riemenscheibe (5) nach einem der vorhergehenden Ansprüche aufweist.

10. Welle (3) nach Anspruch 9, dadurch gekennzeichnet, daß die Riemenscheibe (5) durch ihre Elastizität auf der Welle gehalten ist.

11. Welle (3) nach Anspruch 9, dadurch gekennzeichnet, daß sie eine Rändelung aufweist.

12. Welle nach Anspruch 11, dadurch gekennzeichnet, daß die Rändelung einen Durchmesser hat, der größer als der Durchmesser der Welle ist.

13. Welle nach einem der Ansprüche 9 bis 12, dadurch gekennzeichnet, daß die Länge L der Kontaktzone zwischen der Innenfläche der Riemenscheibe (5) und der Außenfläche der Welle (3) größer als die Länge 1 der Rändelung (2) ist.

14. Verfahren zum Herstellen einer Welle für einen Elektromotor (6), dadurch gekennzeichnet, daß es die folgenden Verfahrensschritte umfaßt:
- Bearbeitung einer Welle zur Bildung von Rändelungen, deren Durchmesser größer als der Durchmesser der Welle ist,
- Bearbeitung oder Formung einer Riemenscheibe aus einem Material nach einem der Ansprüche 2, 3, 4 oder 5,
- Aufstecken der Riemenscheibe (5) auf eine Welle (3) nach einem der Ansprüche 9 oder 10.

## Claims

1. Pulley (5) for the driving of a belt (7) for transmitting a force from an electric motor (6), characterized in that the said pulley (5) is entirely constructed in an insulating material exhibiting an elasticity enabling it to be fitted onto a shaft (3) of a motor, this shaft (3) being provided with knurling, the diameter of which is greater than the diameter of the shaft (3).

2. Pulley (5) according to Claim 1, characterized in that the insulating material is a plastic.

3. Pulley (5) according to Claims 1 and 2, characterized in that the insulating material is a polyamide of the 6,6 group (PA-6,6) filled with molybdenum.

4. Pulley (5) according to Claim 3, characterized in that this insulating material is marketed under the name "NYLATRON" by the POLYPENCO company.

5. Pulley (5) according to one of the preceding claims, characterized in that the said pulley is constructed in a thermoplastic or thermosetting material.

6. Pulley according to any one of the preceding claims, characterized in that the length L of the area of contact between the inner surface of the pulley (5) and the outer surface of the shaft (3) is greater than the length 1 of the knurling (2).

7. Pulley (5) according to any one of Claims 1 to 6, characterized in that it includes a plurality of grooves having a profile in the form of an "H".

8. Pulley (5) according to any one of Claims 1 to 6, characterized in that it includes a plurality of grooves having a profile in the form of a "J".

9. Shaft (3) of an electric motor (6), characterized in that it includes at least one pulley (5) according to any one of the preceding claims.

10. Shaft (3) according to Claim 9, characterized in that the pulley (5) holds onto the said shaft by elasticity.

11. Shaft (3) according to Claim 9, characterized in that it includes knurling.

12. Shaft according to Claim 11, characterized in that this knurling has a diameter greater than the diameter of the shaft.

13. Shaft according to any one of Claims 9 to 12, characterized in that the length L of the area of contact between the inner surface of the pulley (5) and the outer surface of the shaft (3) is greater than the length 1 of the knurling (2).

14. Method of constructing a shaft for an electric motor (6), characterized in that it includes the following steps:
· machining a shaft so as to produce knurling, the diameter of which is greater than the diameter of the shaft,
· machining or moulding a pulley made of a material according to one of Claims 2, 3, 4 or 5,
· fitting the pulley (5) onto a shaft (3) according to one of Claims 9 or 10.
